# EUROPEAN PATENT APPLICATION

(11) **EP 2 249 115 A2**
(43) Date of publication of application: **10.11.2010**
(21) Application number: 10161866.8
(22) Date of filing: 04.05.2010
(51) Int. Cl.: F28D 9/00, F28F 3/12

(54) **Heat exchanger for bathing shower**

(30) Priority: 05.05.2009 CN 200920056295 U
(71) Applicant: Cai, Ying Lin, Rong Chi Town, Shunde County Guangdong (CN); Hsu, Chao Fou, Sanmin Chiu Kaohsiung 807 (TW)
(72) Inventor: Cai, Ying Lin, Rong Chi Town Guangdong (CN)
(74) Representative: Viering, Jentschura & Partner

(57) **Abstract**

Heat exchanger for bathing shower comprising a heat exchanging slab (30) and two sealing covers (40). The heat exchanging slab (30) is extruded by alloy metal material into simple overall structure. A close water circulation entirety with circulation directing means (38) is created therein.

## Description

### Field of the Present Invention

The present invention relates to an energy saving heat exchanger for a bathing shower, the heat exchanger having a simple structure that significantly decreases manufacturing time and costs and provides enhanced energy saving efficiency so as to make the heat exchanger more affordable and attractive to consumers. Thus, the invention not only provides increased popularity but also offers environmental protection due to increased energy saving and reduced carbon emissions.

### Background of the Invention

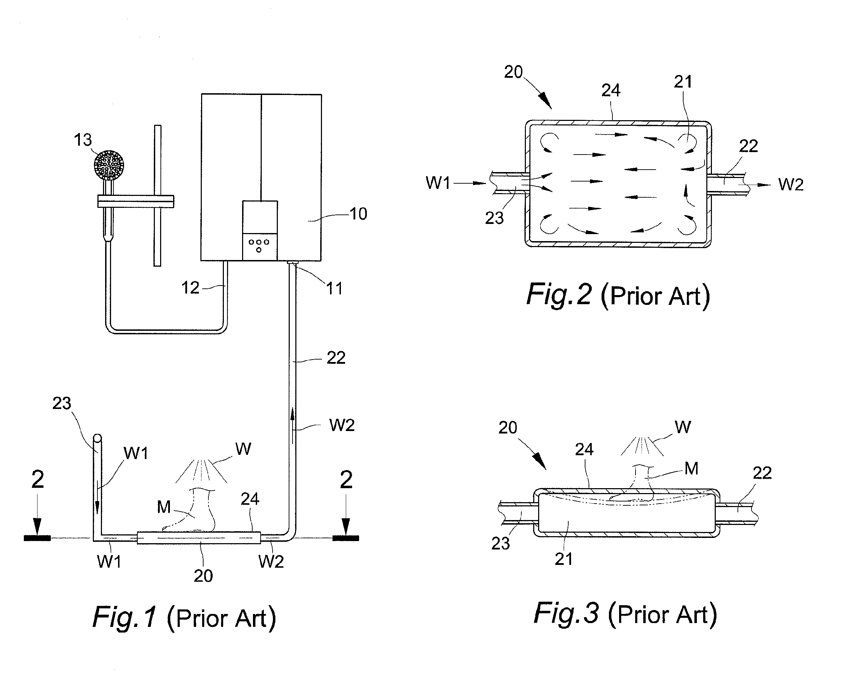

For the purpose of reducing their carbon footprint, many heat exchangers for bathing showers used in households have been introduced in the market. The design concept is that incoming cold tap water running through the heat exchanger is heated up by hot waste water from the shower, which serves as a thermal source, so that the temperature of the tap water output from the heat exchanger becomes warmer than that of the incoming tap water, the output being directed into an inlet pipe for the water heater of the bathing shower. As a result, the temperature of the inlet water for the water heater of the bathing shower is increased to save energy required for heating the water. Taking China Utility Model Patent No.CN201016505 for title "Water heater of energy saving type" publicized on February 6, 2008 as an example, as shown in **FIGS. 1** through **5****,** the water heater **10** is made of a metal heat absorbing slab **20,** which comprises a hollow chamber **21** with a top surface **24, a** water inlet pipe **23** and a water outlet pipe **22** such that said hollow chamber **21,** which allows cold tap water **W1** flows therein, has one end thereof with water outlet pipe **22** connected to a water intake **11** of the water heater **10** and the other end thereof with water inlet pipe **23** connected to a source of cold tap water **W1** (as shown in **FIGS. 1** and **2****).** Firstly, upon a shower user **M** starting shower, certain hot shower water **W,** which comes from the water heater **10** and flow through a water outlet pipe **12,** will spray out of the shower sprayer **13;** Secondly, the hot shower water **W** will drop on the top surface **24** of the metal heat absorbing slab **20** after shower on the body of the shower user **M,** meanwhile certain cold tap water **W1** will flow into the chamber **21** of the metal heat absorbing slab **20** via the water inlet pipe **23** to absorb thermal energy of the dropped hot shower water **W** on the top surface **24** of the metal heat absorbing slab **20** so that the cold tap water **W1** becomes warm heat-exchanged water **W2;** Thirdly, the warm heat-exchanged water **W2** then flows out of the water outlet pipe **22** of the metal heat absorbing slab **20;** and Finally, the warm heat-exchanged water **W2** flows into the water heater **10** via the water intake **11** thereof for serving as warm feeding water (as shown in **FIG. 2****).** Thereby, the energy saving effect for electricity of gas consumption of the water heater **10** is achieved.

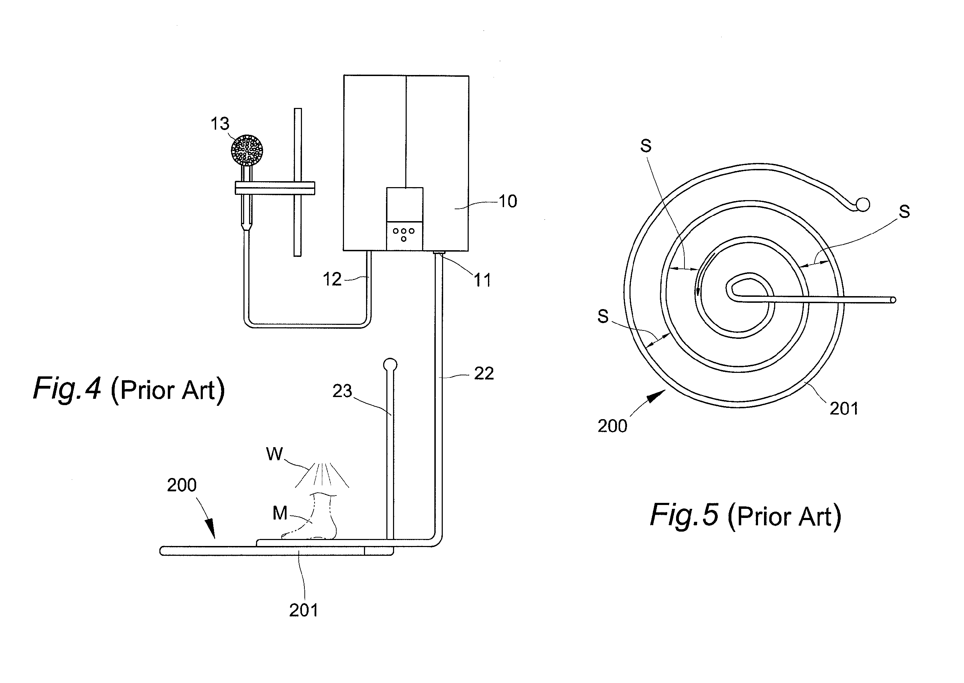

Please refer to **FIGS. 4** and **5** that show another embodiment for the water heater **10** of a metal heat absorbing slab **200**. The metal heat absorbing slab **200** comprises a spiral metal tube **201** having multiple continual coils with a gap **S** for each pair of adjacent coils, one end thereof with water outlet pipe **22** connected to a water intake **11** of the water heater **10** and the other end thereof with water inlet pipe **23** connected to a source of cold tap water **W1**. Similar to the circumstance in the metal heat absorbing slab **20,** likewise, the operation for the metal heat absorbing slab **200** is recapped below: Firstly, upon a shower user **M** starting shower, certain hot shower water **W**, which comes from the water heater **10** and flow through a water outlet pipe **12,** will spray out of the shower sprayer **13;** Secondly, the hot shower water **W** will drop on the top surface of the metal heat absorbing slab **200** after shower on the body of the shower user **M,** meanwhile certain cold tap water **W1** will flow into the spiral metal tube **201** of the metal heat absorbing slab **200** via the water inlet pipe **23** to absorb thermal energy of the dropped hot shower water W on the top surface of the metal heat absorbing slab **200** so that the cold tap water **W1** becomes warm heat-exchanged water **W2**; Thirdly, the warm heat-exchanged water **W2** then flows out of the water outlet pipe 22 of the metal heat absorbing slab **200;** and Finally, the warm heat-exchanged water **W2** flows into the water heater **10** via the water intake **11** thereof for serving as warm feeding water (as shown in **FIG. 4****).** Thereby, the energy saving effect for electricity of gas consumption of the water heater **10** is achieved.

However, some drawbacks still exist in the China Utility Model Patent No. CN201016505 as following:
1. Please refer to **FIGS. 1** through **3** for metal heat absorbing slab **20.** In order to keep the hot shower water W drop on the top surface **24** of the metal heat absorbing slab **20,** the shower user **M** must stand on the top surface **24** of the metal heat absorbing slab **20** so that the metal top surface **24** with hollow chamber **21** beneath will be indented deformation owing to body weight strain of the shower user **M** for long term use (as hypothetical line shown in **FIG. 3****).** Because metal heat absorbing slab **20** is fabricated by metal welding process, water leakage is incurred from certain metal welding seams on the metal heat absorbing slab **20** being fractured due to indented deformation thereon so that not only the heat exchanging effect will be lost but also certain fractured metal welding seams may cause accidental hurt to the shower user **M** inadvertently. Moreover, because no circulation directing means is designed in the hollow chamber **21,** water turbulences will happen in the chamber **21** after cold tap water **W1** flows into therein via the water inlet pipe 23 (as indicting arrow heads shown in **FIG. 3****)** so that the energy saving effect will be considerably decreased in consequence of lowering heat exchanging efficiency.
2. Please refer to **FIGS. 4** and **5** for metal heat absorbing slab **200.** Likewise, in order to keep the hot shower water **W** drop on the top surface of the metal heat absorbing slab **200,** the shower user **M** must stand on the top surface of the metal heat absorbing slab **200.** Because metal heat absorbing slab **200** is formed by spiral metal tube **201** having multiple continual coils with a gap **S** for each pair of adjacent coils, the round top surface thereof becomes slippery once hot shower water **W** drops thereon so that the shower user **M** stands thereon often suffered from injure inadvertently incurred by falling down due to such round slippery surface (as shown in **FIG. 4****).** That is a menace to the safety of the shower user **M.** Moreover, all the gaps **S** between each pair of adjacent coils in the spiral metal tube **201** cause no heat exchanging function as the hot shower water W passes therein without contacting to the spiral metal tube **201** (as shown in **FIG. 5****)** so that the energy saving effect will be considerably decreased in consequence of lowering heat exchanging efficiency.
3. The key process for the manufacturing of metal heat absorbing slab **20** in **FIG. 1** and metal heat absorbing slab **200** in **FIG. 4** is metal welding process, which cause relative high labor cost in manufacturing expense as metal welding process is often worked by high-skilled technician with high salary to maintain high yield. Moreover, the multiple continual coils with a gap **S** for each pair of adjacent coils for fabricating the spiral metal tube **201** must processed by a tube-bending machine of high accuracy together with metal welding process for welding connection with water inlet pipe 23 and water outlet pipe **22** respectively so that overall manufacturing cost keep soaring high without possibility of lowering down. Thus, the ex-factory price and retail price for the product of metal heat absorbing slab **20** and **200** become particular high with difficulty for lowering down so that not only the purchasing intention of the consumer is retarded but also the product itself becomes unpopular. Therefore, how to contrive an improved product of heat exchanger for bathing shower with simplified structure and relative low manufacturing cost to satisfy with the purchasing ability and intention of customers seem very critical.

### Summary of the Invention

The primary object of the present invention is to provide a "heat exchanger for bathing shower" with overall simplified structure and supporting strength to bear normal weight of human body, particularly for one has internal circulation directing means to substantially increase energy saving effect in consequence of considerably improving heat exchanging efficiency so that the heat exchanger fabricated by the present invention not only substantially shortens overall process steps and decreases manufacturing cost without necessity to hire metal welding technicians of high salary with result in reducing selling price for being affordable by the purchasing ability of the consumers and for appealing the purchasing intention of the consumers but also enhance overall energy saving effect and prolong service life span with result in encouraging the purchasing intention of the consumers. Thus, the present invention not only facilitates promotion and increases popularity of bathing shower heat exchangers, but also achieves environmental protection by energy saving and reduced carbon footprint.

### Brief Description of the Drawings

**FIG. 1** is the first structural schematic view for China Utility Model Patent No. CN201016505.
**FIG. 2** is a sectional view taken along line **2-2** as indicated in **FIG. 1****.**
**FIG. 3** is an operational schematic view for China Utility Model Patent No. CN201016505.
**FIG. 4** is the second structural schematic view for China Utility Model Patent No. CN201016505.
**FIG. 5** is the third structural schematic view for China Utility Model Patent No. CN201016505.
**FIG. 6** is a perspective exploded view showing a heat exchanger for bathing shower of the present invention.
**FIG. 7** is a sectional schematic view showing a heat exchanger for bathing shower of the present invention.
**FIG. 8** is a sectional view taken along line **8-8** as indicated in **FIG. 7****.**
**FIG. 9** is a schematic view showing an installation and operation method of a heat exchanger for bathing shower of the present invention.
**FIG. 10** is a schematic view showing a manufacturing process for a heat exchanging slab of the present invention via extruding method.
**FIG. 11** is a perspective view showing a drilling process for a heat exchanging slab of the present invention via drilling tool.
**FIG. 12** **is** a sectional schematic view showing a heat exchanger for bathing shower in another exemplary embodiment of the present invention.
**FIG. 13** is a sectional view taken along line **13-13** as indicated in **FIG. 12****.**
**FIG. 14** is a schematic view of the first exemplary embodiment showing a different combination of variant heat exchangers for bathing shower of the present invention.
**FIG. 15** is a schematic view of the second exemplary embodiment showing a different combination of variant heat exchangers for bathing shower of the present invention.
**FIG. 16** is a schematic view of the third exemplary embodiment showing a different combination of variant heat exchangers for bathing shower of the present invention.
**FIG. 17** is a schematic view of the fourth exemplary embodiment showing a different combination of variant heat exchangers for bathing shower of the present invention.

### Detailed Description of the Preferred Embodiments

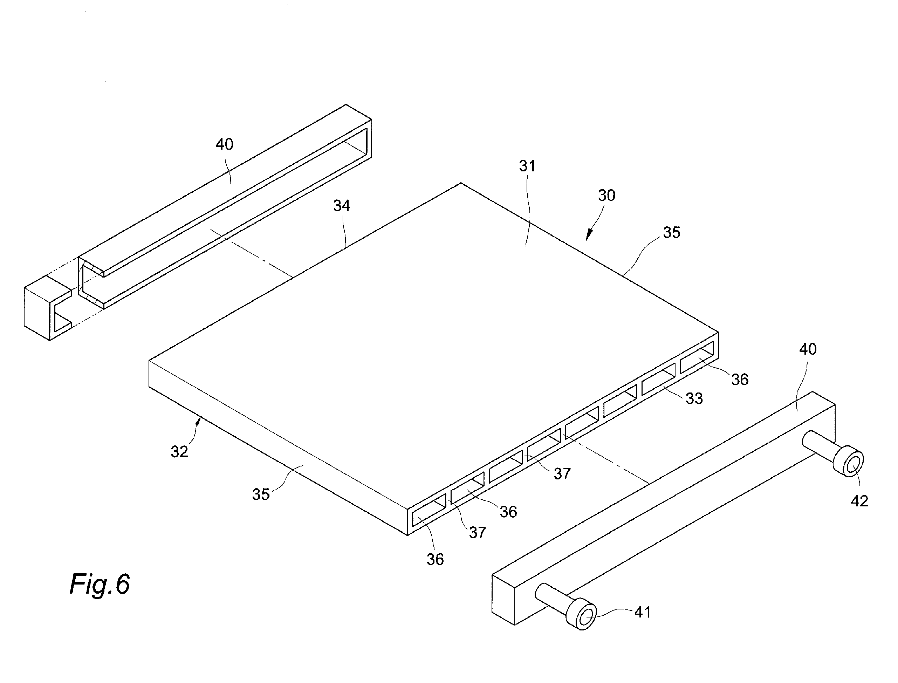

**FIGS. 6** through **FIGS.8****,** a "heat exchanger for bathing shower" of the present invention includes a heat exchanging slab **30** and two sealing covers **40** such that one of the sealing covers **40** is created with a water intake **41** and a water outtake **42,** wherein:

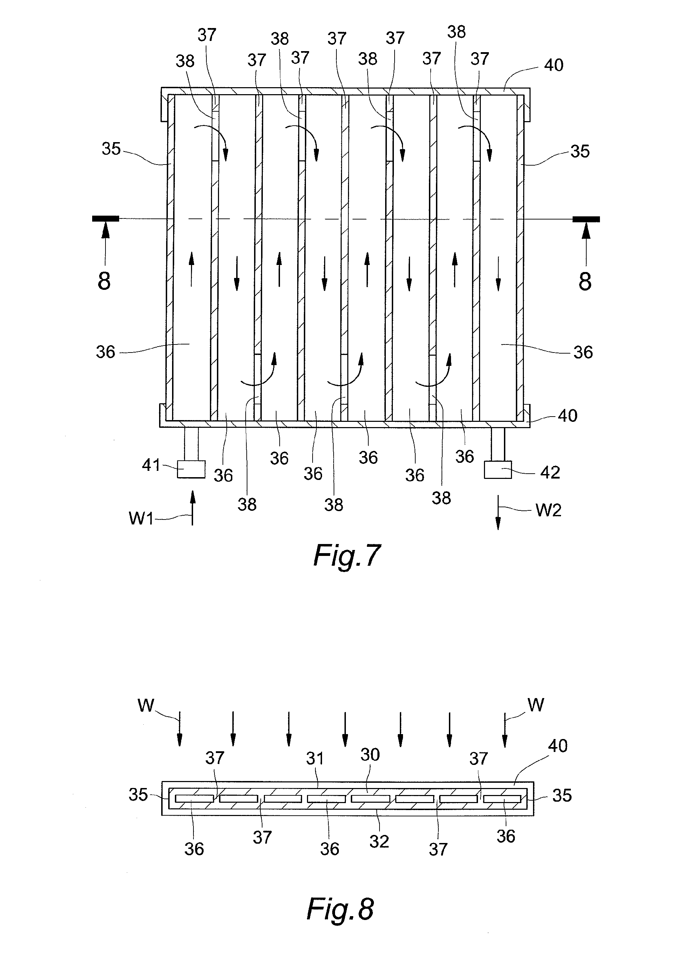

The heat exchanging slab **30,** which is a flat planar cuboid extruded by alloy metal material, includes a flat top surface **31,** a flat bottom surface **32,** a front hatch **33,** a rear hatch **34,** two parallel upright flanks **35,** a plurality of parallel water passages **36** penetrated through between the front hatch **33** and rear hatch **34** such that each pair adjacent water passages **36** is partitioned by a septum **37** with a circulating bore **38** created thereon in interlaced stagger manner, which means a bore in upper section of one septum and another bore in lower section of the other septum for each pair of adjacent septa **37** (as shown in **FIG. 7****);** and
each of two sealing covers **40** respectively covers on the front hatch **33** and rear hatch **34** of the heat exchanging slab **30** to closely seal all ends of the water passages **36** in water-tight manner by welding way so that all the water passages **36** together with septa **37** and circulating bores **38** form a close water circulation entirety.

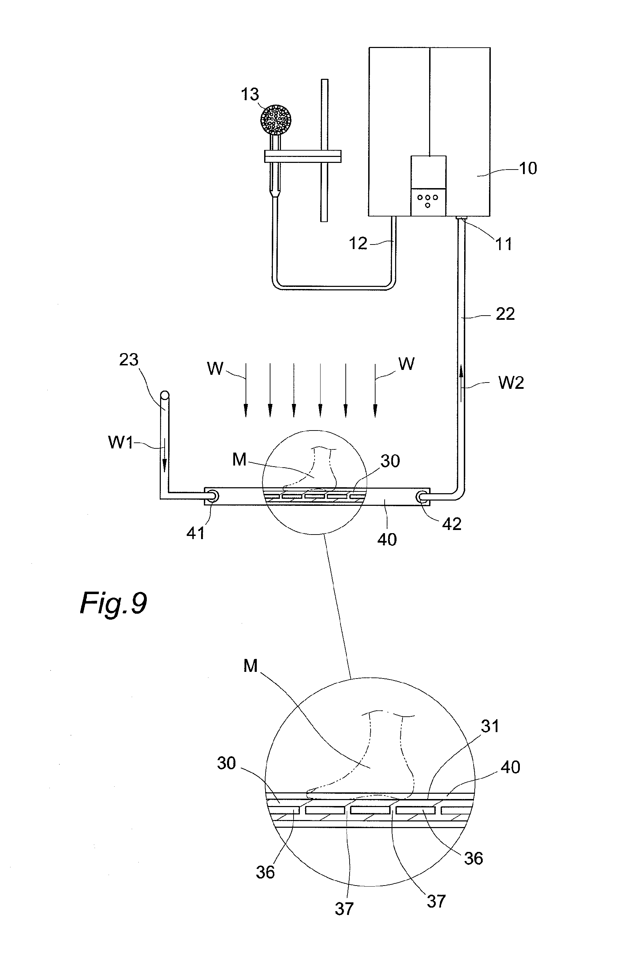

**FIGS. 7** through **FIGS.9****,** illustrate installation and operation method for a heat exchanger for bathing shower of the present invention. By means of pipe fittings, connect a water inlet pipe **23** of tap water to the water intake **41** on the sealing cover **40** while connect a water intake **11** of a water heater **10** to the water outtake **42** on the same sealing cover **40** to finish the installation before operation (as shown in **FIG. 9****).** Firstly, upon a shower user **M** starting shower, certain hot shower water **W**, which comes from the water heater **10** and flow through a water outlet pipe **12,** will spray out of the shower sprayer **13;** Secondly, the hot shower water **W** will drop on the flat top surface **31** of the heat exchanging slab **30** after shower on the body of the shower user **M,** meanwhile certain cold tap water **W1** will flow into the water passages **36** of the heat exchanging slab **30** via the water inlet pipe **23** and circulate among all water passages **36** by means of every circulating bore **38** on each septum **37** (as indicating arrow heads shown in **FIG. 7****)** to absorb thermal energy of the dropped hot shower water **W** on the top surface **31** of the heat exchanging slab **30** so that the cold tap water **W1** becomes warm heat-exchanged water **W2**; Thirdly, the warm heat-exchanged water **W2** then flows out of the water outtake **42** on the sealing cover **40** of the heat exchanging slab **30;** and Finally, the warm heat-exchanged water **W2** flows into the water heater **10** orderly via the water outlet pipe **22** and the water intake **11** thereof for serving as warm feeding water (as shown in **FIGS. 7** and **9****).** Thereby, the energy saving effect for electricity of gas consumption of the water heater **10** is achieved.

It is known from **FIGS. 8** and **9** that the plural septa **37** formed between each pair adjacent water passages **36** in the heat exchanging slab **30** of the present invention also serve as props between the flat top surface **31** and flat bottom surface **32** of the heat exchanging slab **30** to be strong enough to completely support normal body weight of a shower user **M** so that not only the service life span of the heat exchanging slab **30** can be extended due to no indented deformation thereon, but also the shower user **M** suffered from injure inadvertently incurred by falling down due to such round slippery surface happened as in the metal heat absorbing slab **200** of the China Patent for title "Water heater of energy saving type" in Number of CN201016505 at New Model invention can be avoided because the flat top surface **31** on the heat exchanging slab **30** offers stable platform for shower user **M** to stand thereon (as shown in **FIG. 8****).**

Moreover, the circulating bore **38,** which is created on each septum **37** and makes every pair adjacent water passages **36** become water communicable mutually, serves as a circulation directing means in the heat exchanging slab **30** (as indicating arrow heads shown in **FIG. 7****)** for directing the cold tap water **W1** to become a smoothly regular path-oriented stable flow in the heat exchanging slab **30** so that the heat exchanging efficiency of the heat exchanging slab **30** is improved and the energy saving effect of the water heater **10** is substantially increased.

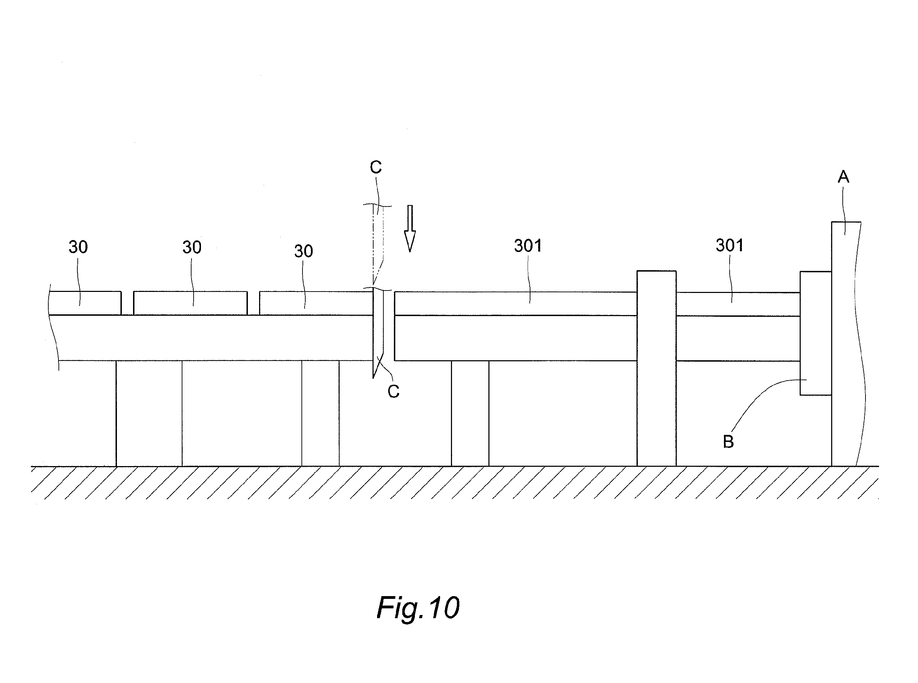

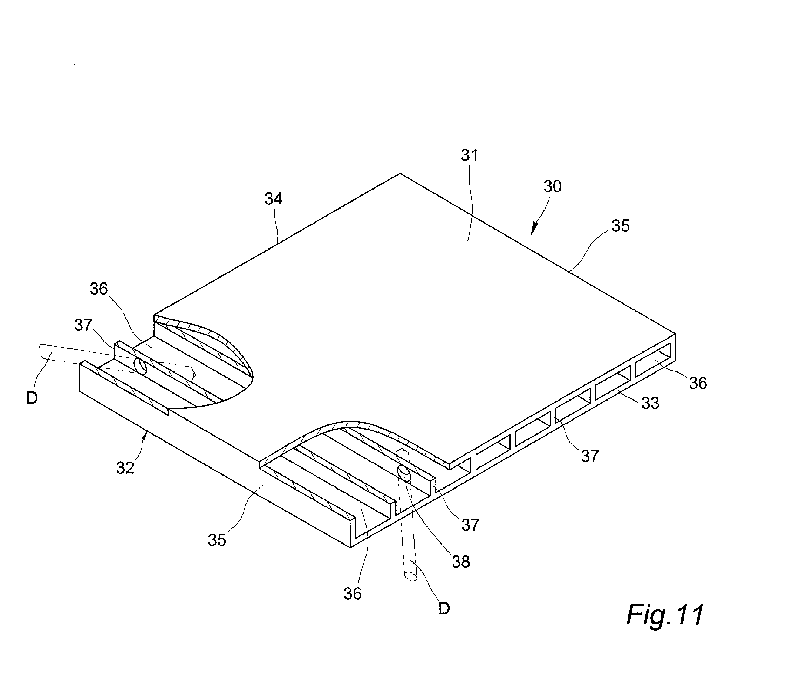

As shown in **FIG. 10****,** the heat exchanging slab **30** of the present invention is manufactured by traditional extruding method. Firstly, by means of extruder **A,** certain melted aluminum alloy is extruded out of extruding die **B** into a bar of heat exchanging slab **301;** Secondly, by means of cutting tool **C,** the bar of heat exchanging slab **301** is progressively cut into heat exchanging slabs **30** piece by piece; and Finally, as shown in **FIG. 11****,** by means of drilling tool **D,** on each of all septa **37,** near to the front hatch **33** or rear hatch **34,** respectively drill a circulating bores **38** in interlaced stagger manner, which means a bore in upper section of one septum and another bore in lower section of the other septum for each pair of adjacent septa **37** to finish the heat exchanging slab **30** production. Firstly, it is universally known that molding cost for extruding die is only one tenth or less of molding cost for injection mold or die-casting mold; secondly, extruding process, which is a continuous manufacturing process, meets the requirement of mass production; and thirdly, extruding process saves 90% of metal welding process. With foregoing triple favorable benefits for extruding process, which is used in manufacturing the heat exchanging slab **30** of the present invention, the overall manufacturing cost of the present invention can **be** substantially decreased with result in effectively reducing selling price of the product thereof. Thereby, the consumers are more affordable to purchase the "heat exchanger for bathing shower" of the present invention in consequence of the increasing purchasing intention. Thus, an immediate and noticeable effect for energy saving of electricity and gas consumption in the water heater **10** by promoting usage the "heat exchanger for bathing shower" of the present invention can be quickly achieved.

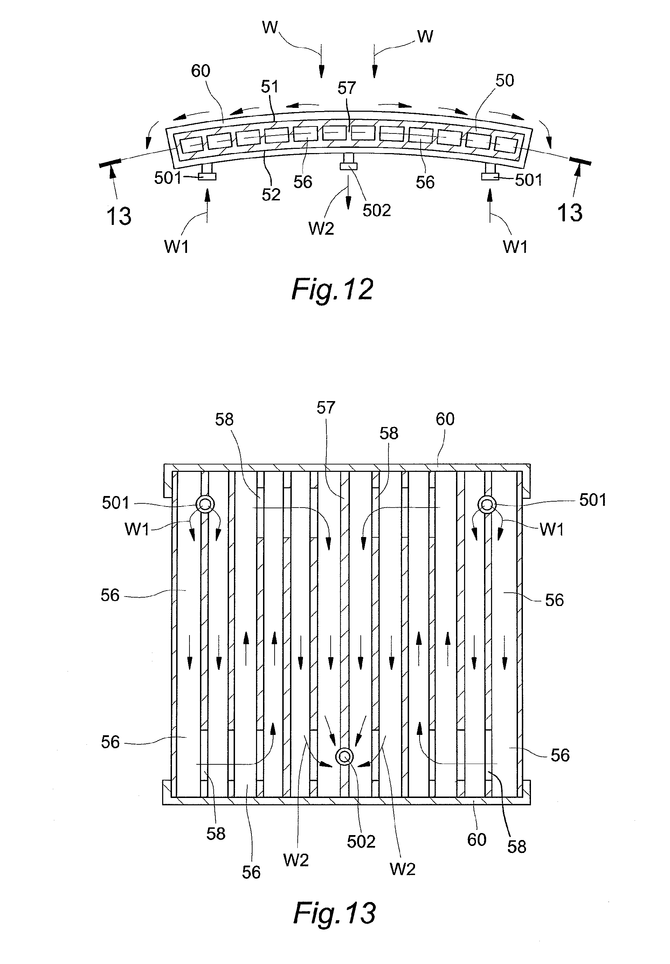

Please further refer to **FIGS. 12** and **13****,** which show a heat exchanger of cambered for bathing shower in another exemplary embodiment of the present invention. The heat exchanger here comprises a cambered heat exchanging slab **50** and two cambered sealing covers **60,** wherein said cambered heat exchanging slab **50** includes a cambered top surface **51,** a cambered bottom surface **52** with two water intakes **501** and a water outtake **502** beneath, a cambered front hatch **53,** a cambered rear hatch **54,** two flanks, a plurality of parallel water passages **56** penetrated through between the front hatch **53** and rear hatch **54** such that each pair adjacent water passages **56** is partitioned by a septum **57** with a circulating bore **58** created thereon in interlaced stagger manner, which means a bore in upper section of one septum and another bore in lower section of the other septum for each pair of adjacent septa **57** (as shown in **FIG. 13****);** and each of two cambered sealing covers **60** respectively covers on the front hatch **53** and rear hatch **54** of the cambered heat exchanging slab **50** to closely seal all ends of the water passages **56** in water-tight manner by welding way so that all the water passages **56** together with septa **57** and circulating bores **58** form a close water circulation entirety to have energy saving effect for the water heater **10.**

The alloy metal material used in the foregoing heat exchanging slab **30** or cambered heat exchanging slab **50** can be replaced by synthetic non-metal compound material with heat conductivity such as carbon fiber for serving in heat exchanging function with hot shower water **W** to still maintain energy saving effect for the water heater **10.**

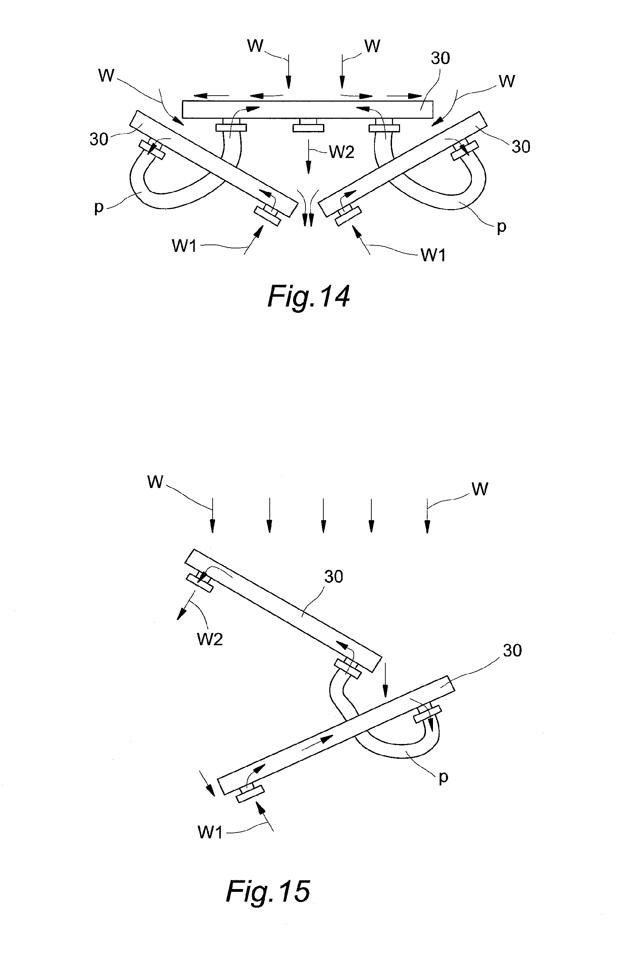

Please refer to **FIGS. 14** through **17****,** which show various exemplary embodiments in different combination of variant heat exchangers for bathing shower of the present invention, wherein **FIG. 14** is an exemplary embodiment showing a combination of inverted triangle for three heat exchanging slabs **30** by means of pipes **P** to properly connect to each water intake and water outtake thereof respectively to form a close water circulation entirety so that the energy saving effect for the water heater **10** is improved as the heat exchanging time with hot shower water **W** is prolonged.

**FIG. 15** is another exemplary embodiment showing a combination of mutually skew angle for two heat exchanging slabs **30** by means of pipes **P** to properly connect to each water intake and water outtake thereof respectively to form a close water circulation entirety so that the energy saving effect for the water heater **10** is improved as the heat exchanging time with hot shower water **W** is prolonged.

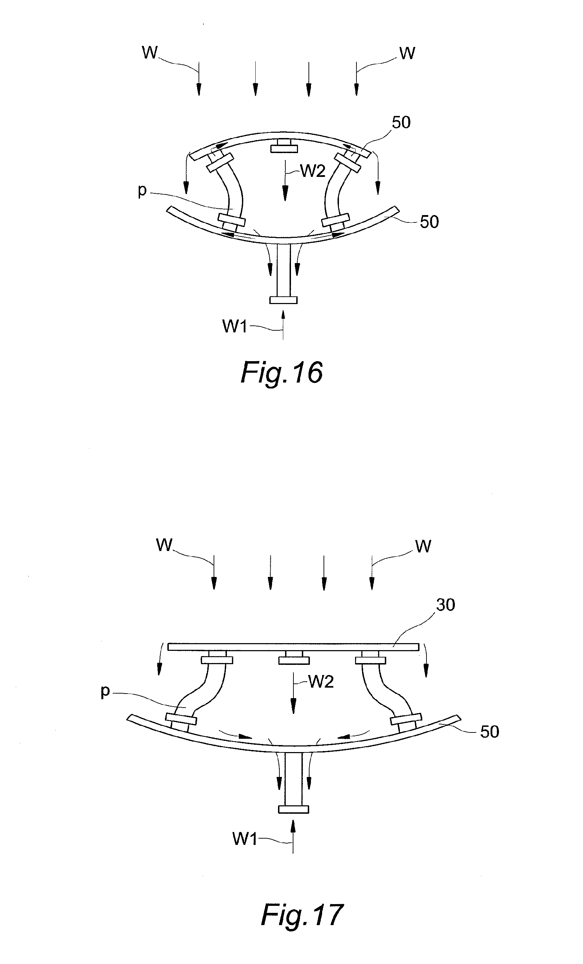

**FIG. 16** is another further exemplary embodiment showing a stack combination of back-to-back arrangement for two cambered heat exchanging slabs **50** by means of pipes **P** to properly connect to each water intake and water outtake thereof respectively to form a close water circulation entirety so that the energy saving effect for the water heater **10** is improved as the heat exchanging time with hot shower water **W** is prolonged.

**FIG. 17** is the other exemplary embodiment showing a stack combination of back-to-back arrangement for a heat exchanging slabs **30** in top and a cambered heat exchanging slabs **50** in bottom by means of pipes **P** to properly connect to each water intake and water outtake thereof respectively to form a close water circulation entirety so that the energy saving effect for the water heater **10** is improved as the heat exchanging time with hot shower water **W** is prolonged.

In conclusion of the disclosures heretofore, the present invention not only can indeed achieve the purpose of substantially decreasing overall manufacturing cost owing to innovative simplified structure and relatively less manufacturing process, but also the energy saving effect for electricity and gas used in the water heater **10** can be highly improved. Accordingly, the present invention meets the patentable criterion.

## Claims

1. A structure of a heat exchanger for bathing shower comprises a heat exchanging slab and two sealing covers such that one of the sealing covers is created with a water intake and a water outtake, wherein said heat exchanging slab, which is a flat planar cuboid extruded by alloy metal material, includes a flat top surface, a flat bottom surface, a front hatch, a rear hatch, two parallel upright flanks, a plurality of parallel water passages penetrated through between the front hatch and rear hatch such that each pair adjacent water passages is partitioned by a septum with a circulating bore created thereon in interlaced stagger manner, which means a bore in upper section of one septum and another bore in lower section of the other septum for each pair of adjacent septa; and each of two sealing covers respectively covers on the front hatch and rear hatch of the heat exchanging slab to closely seal all ends of the water passages in water-tight manner by welding way so that all the water passages together with septa and circulating bores form a close water circulation entirety.

2. A structure of a heat exchanger for bathing shower as claimed in claim 1, wherein said alloy metal material is aluminum alloy, copper or copper alloy.

3. A structure of a heat exchanger for bathing shower as claimed in claim 1, wherein said alloy metal material is replaced by synthetic non-metal compound material with heat conductivity.

4. A structure of a heat exchanger for bathing shower as claimed in claim 1, wherein said flat planar cross section shapes of the heat exchanging slab and two sealing covers are adapted into cambered cross section shapes, wherein said cambered heat exchanging slab includes a cambered top surface, a cambered bottom surface with two water intakes and a water outtake beneath, a cambered front hatch, a cambered rear hatch, two flanks, a plurality of parallel water passages penetrated through between the front hatch and rear hatch such that each pair adjacent water passages is partitioned by a septum with a circulating bore created thereon in interlaced stagger manner; and each of two cambered sealing covers respectively covers on the front hatch and rear hatch to closely seal all ends of the water passages in water-tight manner so that all the water passages together with septa and circulating bores form a close water circulation entirety.
